# EUROPÄISCHE PATENTSCHRIFT

(11) **EP 0 460 288 B1**
(45) Veröffentlichungstag und Bekanntmachung des Hinweises auf die Patenterteilung: **05.03.1997**
(21) Anmeldenummer: 90123923.6
(22) Anmeldetag: 12.12.1990
(51) Int. Cl.: A01D 78/10, A01B 27/00

(54) **Heuwerbungsmaschine**
Haymaking machine
Machine de fenaison

(30) Priorität: 16.05.1990 DE 4015767
(43) Veröffentlichungstag der Anmeldung: 11.12.1991
(73) Patentinhaber: Alois Pöttinger Maschinenfabrik GmbH, A-4710 Grieskirchen (AT)
(72) Erfinder: Leposa, Wolfgang, A-4710 Grieskirchen (AT); Mairhuber, Josef, A-4722 Peuerbach (AT)
(74) Vertreter: Dupal, Helmut, Dipl-Ing.

(56) Entgegenhaltungen:
- EP-A- 0 131 530
- EP-A- 0 203 023
- DE-A- 2 002 746
- DE-A- 2 004 349
- DE-A- 3 418 352
- DE-B- 1 215 991
- DE-B- 2 150 464
- DE-U- 8 807 054
- FR-A- 2 098 567
- GB-A- 1 488 055

## Beschreibung

Die Erfindung betrifft eine Heuwerbungsmaschine mit den Gattungsmerkmalen des Oberbegriffes des Anspruches 1.

Maschinen dieser Gattung weisen eine besonders große Arbeitsbreite auf, so daß Maßnahmen zur Verringerung ihrer Breite auf die zulässige Straßenfahrbreite getroffen werden, in der gewöhnlich nur noch zwei Rechräder mit dem inneren Tragrahmen des Maschinenrahmens an ihrem Platz verbleiben, während weiter nach außen liegende Rechräder an den gelenkig mit dem inneren Tragrahmen verbundenen Tragrahmen in eine aufrechte Lage oder darüberhinaus noch nach innen zu über den inneren Tragrahmen verschwenkt werden.

In Folge dieser Verschwenkung ruht ein großer Teil des Maschinengewichtes auf den Tasträdern der Drehachsen der beiden inneren Rechräder, was zu deren überlastung und Instabilität führen kann.

Für die Überführung des Maschinenrahmens in die Transportlage muß der innere Tragrahmen noch nach hinten oben verschwenkt werden, damit die Rechorgane im vorderen Bereich der Rechräder aus der Bodennähe zur Vermeidung der Bödenberührung entfernt werden.

Dadurch wird aber der Schwerpunkt der Maschine noch weiter nach hinten verlagert, so daß besonders bei der Verbindung der Maschine mit einer Deichsel, die Anhängung zu stark entlastet wird und sich ein instabiles Anhängeverhalten ergibt.

Eine Maschine dieser Art mit nur vier Rechrädern ist in der EP-A-0 203 023 beschrieben.

Bei einer Schwadmaschine, wie sie in der DE-A-34 18 352 beschrieben und dargestellt ist, mit hochschwenkbaren Seitenteilen, wurden zur stabilen Abstützung an deren inneren Tragrahmen starre Radträger angebracht, die nach hinten über die Schwadrechräder hinausreichend, Stützräder an einem, an dem inneren Tragrahmen starr befestigten Gestell tragen, das in Bezug zur Arbeitsrichtung hinter der Maschine liegt und an dem die Stützräder den Tragrahmen, der für Frontanbau eingerichtet ist, außerhalb der Schwadrechräder abstützen.

Die Aufgabe der Erfindung besteht darin, bei Maschinen der eingangs genannten Gattung, eine stabile Unterstützung zu schaffen, die zumindest bei der Straßenfährt verwendbar ist, aber auch bei der Fahrt über die Erntefläche und insbesondere beim Vorgewende benutzt werden kann oder aber auch beim Arbeitsvorgang verwendbar bleibt.

Die gestellte Aufgabe wird durch die kennzeichnenen Merkmale des Anspruches 1 an einer Maschine der eingangs genannten Gattung gelöst.

Falls der einzelne Radträger bei einer Heuwerbungsmaschine Anwendung findet, bei der zwischen den beiden inneren Rechrädern ein von den Rechrädern in Arbeitslage nicht bestreuter Raum bleibt, kann das Stützrad stets in dieser Lage verbleiben, wobei ein geringer Abstand zu diesen Rechrädern für die Manövrierbarkeit von Vorteil ist und das Streuen des Halmgutes durch die Rechräder sicher nicht behindert, aber die Bodenanpassung der Rechräder günstiger gestaltet.

Ebenso ist es möglich die Stützräder in ihrer Lage auf dem Boden zu belassen, wenn die Stützradträger zwischen den inneren und den ersten seitlichen Rechrädern angeordnet sind und dort ein nicht bestreuter Raum vorhanden ist.

Falls die inneren Rechräder zwischen sich einen Streubereich für das Erntegut bilden, kann das Stützrad in Arbeitslage der Maschine nicht verwendet werden, wobei sich das Hochschwenken des Stützradträgers als einfachste Lösung anbietet.

Die Abstützung wird durch die Anwendung zweier Stützradträger besonders verbesert und in Fällen, in denen zwischen den beiden inneren Rechrädern gestreut wird, können die Stützräder hinter und zwischen den inneren und seitlichen Rechrädern in allen Betriebslagen als Stützmittel in ihrer Lage verbleiben, werden aber vorteilhafterweise höhenverschwenkbar angebracht und gefedert ausgestaltet sind.

Besonders hohe Stabilität der Unterstützung der Maschine wird erreicht, wenn die Stützräder einen entsprechend großen Abstand aufweisen, durch den die Unterstützungsfläche möglichst groß wird.

Die Unteransprüche, auf die als Bestandteil der Beschreibung besonders verwiesen wird, betreffen besonders güsntige Ausgestaltugnen der Erfindung.

Zur Verbesserung der Stützwirkung ist es möglich, den Stützradträger gegabelt auszubilden, wodurch die seitliche Stabilität der Unterstützung verbessert wird.

Für das ungestörte Streuen des Erntegutes ist es wichtig, jede Behinderung zu vermeiden; dazu ist es vorteilhaft, in der Transportlage den oder bei mehreren die Stützradträger über die Höhe des Tragrahmens, an dem sie befestigt sind, hinaus zu verschwenken, um auch nach oben zu genügend Freiraum für das Streuen des Halmgutes zu schaffen.

Eine einfache Begrenzung der Verschwenkbarkeit wird mittels einer einstellbaren Abstützung erreicht, die besonders günstige Betriebseigenschaften ergibt, wenn eine Feder geeignet angeordnet ist, mit der Überlastungen des Rahmens vermieden werden können.

Einen großen Verstellbereich erhält man durch Anwendung eines hydraulischen Verstellmittels, wobei die Bedienbarkeit vom Fahrersitz außerordentlich vereinfachend ist.

Durch die Verwendung der Feder als Haltemittel in einer hochgeschwenkten Ruhelage der Stützräder ergibt sich eine einfache sichere Bedienung wenn die Feder für den Schwenkvorgang entspannt wird.

Besonders vorteilhaft ist es, wenn bei einer angehängten Maschine die Deichsel verschwenkbar angelenkt und verstellbar ist, weil dadurch die gewünschte Lage der Maschine einstellbar ist, in der entweder das Stützrad oder die Stützräder, oder aber die Tasträder, oder aber bei entsprechender Einstellung auch beide, auf dem Boden sind.

Besonders erleichtert wird die Einstellung der Deichsel durch die Verwendung eines hydraulischen Verstellmittels durch dessen Betätigbarkeit vom Fahrersitz aus.

Die Erfindung wird nachstehend an Hand der Zeichnung beschrieben.

Dabei zeigt :
- Fig. 1: eine Heuwerbungsmaschine zum Zetten und Wenden, von der vier Rechräder wiedergegeben sind in Draufsicht, mit Anhängedeichsel und zwei Stützradträgern, schematisch,
- Fig. 2: eine Seitenansicht geschnitten nach I-I in Fig.1 mit hochgehobenem Tragrahmen, bei dem die Tasträder vom Boden abgehoben sind, mit Anhängedeichsel, schematisch,
- Fig. 3: eine Seitenansicht geschnitten nach I-I in Fig.1 mit abgesenktem Tragrahmen, bei dem Tasträder und Stützrad oder Stützräder auf dem Boden stehen, die in Ruhelage hochgeschwenkten Stützräder dünn angedeutet, mit Anhängedeichsel, schematisch, und
- Fig. 4: eine Heuwerbungsmaschine wie in Fig.1 mit nur einem Stützradträger und Zugbalken und Anbauvorrichtung für ein Zugfahrzeug in Draufsicht, schematisch.

Die Heuwerbungsmaschine besitzt einen Maschinenrahmen 1, der aus einem quer zur Arbeitsrichtung ausgerichteten inneren Tragrahmen 2 und aus daran anschließenden, mit diesem und/oder untereinander mit Gelenken 9,9' verbundenen, seitlichen Tragrahmen 3,3' besteht, an die sich noch weitere - nicht dargestellte - seitliche Tragrahmen anschließen können.

An den Tragrahmen 2,3,3' sind aufrechte Drehachsen 8 befestigt, die sich mit Tasträdern 24 auf dem Boden abstützen. An den Drehachsen 8 sind Rechräder 5,5',6,6' abwechselnd gegensinnig umlaufend angetrieben gelagert. Dabei trägt der innere Tragrahmen 2 zwei innere Rechräder 5,5' und die seitlichen Tragrahmen 3 und 3' je ein Rechrad 6 und 6'. Die Rechräder 5,5',6,6' laufen paarweise zusammen und streuen das zusammengerechte Erntegut hinter sich wieder auseinander, wobei sich hinter Rechrädern, zwischen denen nicht gestreut wird eine nicht bestreute Fläche ausbildet, die erst bei Fortschreiten der Arbeit von gestreutem Erntegut bedeckt wird. Bei einer Maschine mit vier Rechrädern liegt diese streufreie Zone zwischen den beiden inneren Rechrädern 5 und 5', bei einer Maschine mit sechs Rechrädern zwischen den inneren Rechrädern 5,5' und den zu diesen benachbarten Rechrädern 6 und 6'.

Der Antrieb der Rechräder selbst erfolgt durch Antriebswellen, die in den Tragrahmen geführt und an den Gelenken ebenfalls gelenkig verbunden sind und über Getriebe in den Getriebegehäusen 30 jedes Tragrahmens.

Die Gelenke 9,9' zwischen dem inneren Tragrahmen 2 und den seitlichen Tragrahmen 3,3'scharnieren um waagrechte in Arbeitsrichtung 11 ausgerichtete Schwenkachsen 12,12' und erlauben die Verschwenkung der seitlichen Tragrahmen 3,3' nach oben in eine Lage seitlich oder oberhalb des inneren Tragrahmens 2 für den Transport auf der Straße.

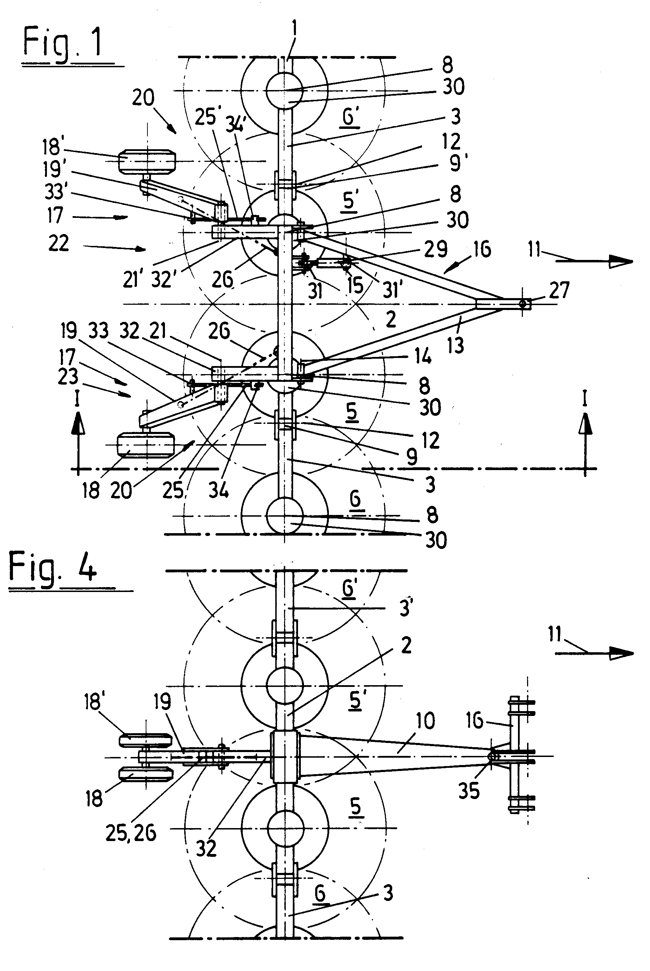

In Fig.1, 2 und 3 ist eine Maschine dargestellt, bei der die Verbindungsvorrichtung 16 der Maschine mit dem Zugfahrzeug von einer Deichsel 13 mit einem Zugmaul 27 gebildet wird, die an dem inneren Tragrahmen 2 um eine Deichselschwenkachse 14, die waagrecht und senkrecht zur Arbeitsrichtung 11 ausgerichtet ist, der Höhe nach verschwenkbar befestigt ist.

Die Verstellung der Deichsel 13 erfolgt mit einer Deichselverstellvorrichtung 15, die ein hydraulisches Verstellmittel 29 und Anlenkungen 31 und 31'an dem inneren Tragrahmen 2 und an der Deichsel 13 umfaßt.

An dem inneren Tragrahmen 2 sind nach hinten, oberhalb der Rechräder 5 und 5', zwei Ausleger 32,32' der Abstützvorrichtung 17 des Maschinenrahmens 1 angebracht, an denen jeweils ein Stützradträger 19,19' angelenkt ist, deren Stützräder 18,18' sich auf dem Boden hinter den Rechrädern 5,5' in möglichst geringem Abstand 20 von diesen abstützen. Die Stützradträger 19,19' sind über fluchtende Gelenkachsen 21,21', die waagrecht und senkrecht zur Arbeitsrichtung 11 liegen, verschwenkbar ausgebildet.

Die Stützradträger 19,19' sind über Abstützungen 25,25' in ihrer Stellung zum Maschinenrahmen 1 gehalten, die an den Stützradträgern 19,19' an Anlenkungen 33,33' und an den Auslegern 32,32' über Anschläge 34,34', die einen Freiweg zulassen, gelenkig befestigt sind.

Parallel dazu sind Federn 26 für eine gefederte Abstützung zwischen dem inneren Tragrahmen 2 und den Stützradträgern 19,19' angebracht, die Stöße, ausgelöst durch Bodenunebenheiten, mildern.

Die Stützradträger 19,19' sind beiderseits nach außen zu gerichtet, so daß ihr Abstand 22 möglichst groß wird und die Stützräder 18,18' dadurch bei dieser Anordnung möglichst weit seitlich nach außen zu liegen kommen; überdies sind sie nach außen gewendet an den Stützradträgern 19,19' angeordnet, wodurch ihr Abstand 23 größer ist als jener der Tasträder 24 der beiden inneren Rechräder 5,5', wodurch eine seitenstabile Abstützung der Maschine auch bei hochgehobenen seitlichen Tragrahmen 3,3' in der Transportlage 7 erreicht wird.

In Fig. 4 ist eine Heuwerbungsmaschine wiedergegeben, bei der unterschiedlich gegenüber der vorbeschriebenen Maschine an dem inneren Tragrahmen 2 ein Zugbalken 10 befestigt ist, an dem eine Verbindungsvorrichtung 16 für ein Zugfahrzeug mit einer lotrechten Schwenkachse 35 angelenkt ist und für den Anbau an das Dreipunktanbauhubwerk eines Zugfahrzeuges eingerichtet ist.

Weiters ist unterschiedlich gegenüber der vorher beschriebenen Maschine, daß nur ein Ausleger 32 mittig an dem inneren Tragrahmen 2 befestigt nach hinten ragt und mit nur einem Stützradträger 19 gelenkig verbunden ist, dessen Anlenkung, Abstützung und Federung der vorher beschriebenen entspricht.

Der Stützradträger 19 stützt sich mit zwei Stützrädern 18,18' auf dem Boden ab, die beiderseits des Stützradträgers 19 angeordnet laufen.

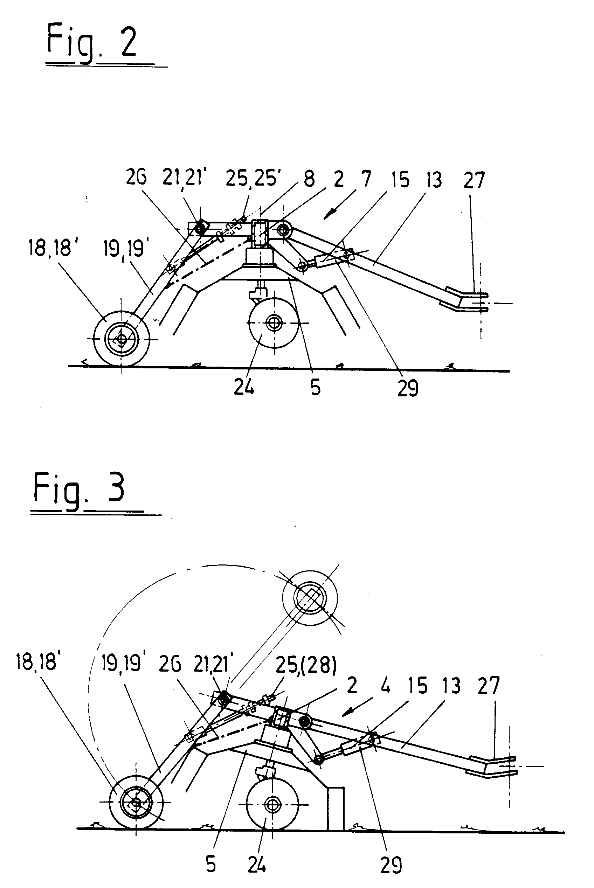

Fig. 2 zeigt eine Maschine der Anordnung nach Fig. 1 in Transportlage 7 und Fig. 3 in Arbeitslage 4, in der Stützräder 18,18' und Tasträder 24 sich auf dem Boden abstützen.

Wenn man die Deichsel 13 mit Zugmaul 27 durch einen Zugbalken 10 und Verbindungsvorrichtung 16 zum Anbau über das Dreipunkthubwerk ersetzt denkt, gelten die anschließenden Ausführungen auch für diese Bauart. Die anschließenden Ausführungen gelten auch für eine Anordnung mit nur einem Stützradträger 19.

Durch das Abwinkeln der Deichsel 13 gegenüber dem inneren Tragrahmen 2 mit Hilfe der Deichselverstellvorrichtung 15 mit einem hydraulischen Verstellmittel 29 werden die Tasträder 24 der Rechräder 5,5',6,6' vom Boden abgehoben und damit die Rechräder 5,5' aus der Rechstellung, d.h. der Arbeitslage 4, in eine Transportlage 7 überführt.

In dieser Lage wird die Maschine transportiert, wobei durch die Lage des Schwerpunktes das Zugmaul 27 stets ausreichend belastet ist, wodurch sich ein stabiles Zugverhalten der Maschine ergibt.

In Fig. 3 ist nun die Arbeitslage 4 der Maschine wiedergegeben, bei der die Deichsel 13 gegenüber dem inneren Tragrahmen 2 mit Hilfe des hydraulischen Verstellmittels 29 gestreckt ist, sodaß die Tasträder 24 zusätzlich zu den Stützrädern 18,18' den Boden berühren, wodurch die Rechräder 5,5',6,6' in die Arbeitslage 4 kommen.

Befinden sich nun, wie schon ausgeführt, die Stützräder 18,18' nicht in einer streufreien Zone, sondern gerade in einem Bereich, in dem in Arbeitslage 4 gestreut wird, so können diese durch Hochschwenken des oder der Stützradträger 19,19' in eine Lage oberhalb des Maschinenrahmens 1 gebracht werden, so daß sie das Streuen nicht behindern.

Dies wird dadurch ermöglicht, daß einerseits der oder die Anschläge 34,34' der Abstützung(en) 25,25' gelöst wird (werden) und der oder die Stützradträger 19,19' entweder gegen die Kraft der Feder 26 verschwenkt wird, worauf diese eine stabile Lage des oder der Stützradträger 19,19' herstellt, oder die Abstützung 25 durch ein hydraulisches Verstellmittel 28 ersetzt, mit dessen Hilfe die Verschwenkung auch fernbedient erfolgen kann; überdies wird dadurch die Einstellung des oder der Stützradträger(s) 19,19' zum inneren Tragrahmen 2 in einfacher Weise veränderbar, um Korrekturen der Arbeitslage 4 oder der Transportlage 7 vornehmen zu können.

### Legende :

- 1: Maschinenrahmen
- 2: innerer Tragrahmen
- 3,3': seitlicher Tragrahmen
- 4: Arbeitslage des Maschinenrahmens 1
- 5,5': innere Rechräder des inneren Tragrahmens 2
- 6,6': seitliche Rechräder der seitlichen Tragrahmen 3,3'
- 7: Transportlage des Maschinenrahmens 1
- 8: Drehachsen der Rechräder 5,5',6,6'
- 9,9': Gelenk zwischen dem inneren Tragrahmen 2 und dem seitlichen Tragrahmen 3,3'
- 10: Zugbalken der Maschine
- 11: Arbeitsrichtung
- 12,12': Schwenkachsen der Gelenke 9 und 9'
- 13: Deichsel
- 14: Deichselschwenkachse
- 15: Deichselverstellvorrichtung
- 16: Verbindungsvorrichtung der Maschine mit einem Zugfahrzeug
- 17: Abstützvorrichtung des Maschinenrahmens 1
- 18,18': Stützrad der Abstützvorrichtung 17
- 19,19': Stützradträger der Abstützvorrichtung 17
- 20: Abstand zwischen Rechrädern 5,5' oder 6 und den Stützrädern 18,18'
- 21,21': Gelenkachse des Stützradträgers 19,19'
- 22: Abstand der Stützradträger 19 und 19' voneinander
- 23: Abstand der Tasträder 24
- 24: Tasträder der Drehachsen 8
- 25,25': Abstützung der Stützradträgers 19,19'
- 26: Feder für gefederte Abstützung
- 27: Zugmaul der Deichsel als Verbindungsvorrichtung 16
- 28: hydraulisches Verstellmittel für den Stützradträger 19,19'
- 29: hydraulisches Verstellmittel für die Deichsel 13
- 30: Getriebegehäuse der Tragrahmen 2,3,3'
- 31,31': Anlenkungen des hydraulischen Verstellmittels 29
- 32,32': Ausleger der Abstützvorrichtung 17
- 33,33': Anlenkungen der Abstützungen 25,25' an den Stützradträgern 19,19'
- 34,34': Anschläge der Abstützungen 25,25' an den Auslegern 32,32'
- 35: Schwenkachse der Verbindungsvorrichtung 16

## Patentansprüche

1. Heuwerbungsmaschine zum Zetten und Wenden von Halm- und Blattgut mit wenigstens vier Rechrädern (5,5',6,6'), die an aufrechten Drehachsen (8) abwechselnd gegensinnig angetrieben umlaufen, die sich mit Tasträdern (24) auf dem Boden abstützen und an Tragrahmen (2,3,3') eines quer zur Arbeitsrichtung (11) der Maschine ausgerichteten, unterteilten Maschinenrahmens (1) befestigt sind, die untereinander mit Gelenken (9,9') verbunden sind, die um liegende, in Arbeitrichtung weisende Schwenkachsen scharnieren und mit denen die Tragrahmen von einer Arbeitslage in eine Transportlage nach oben verschwenkbar sind, in der die Breite der Maschine auf Straßenfahrbreite herabgesetzt ist, während der innere Tragrahmen (2), der die Verbindungsvorrichtung (16) für ein Zugfahrzeug trägt, unverschwenkt bleibt, **dadurch gekennzeichnet**, daß der innere Tragrahmen (2) mit einer Abstützvorrichtung (17) versehen ist, die wenigstens ein Stützrad (18) umfaßt und deren Stützradträger (19,19') (19,19') um wenigstens eine liegende, quer zur Arbeitsrichtung (11) der Maschine ausgerichtete Gelenkachse (21,21') höhenverschwenkbar am inneren Tragrahmen (2) befestigt sind und über die Rechräder (5,5',6,6') hinweggreifend hinter den Rechrädern (5,5',6,6',) in geringem Abstand (20) zu diesen den Maschinenrahmen (1) mittels des wenigstens einen Stützrades (18) auf dem Boden abstützen, wobei bei Anordnung eines einzigen Stützradträgers (19) dieser mittig und bei Anordnung von zwei Stützradträgern (19,19') diese in einem Abstand voneinander am inneren Tragrahmen (2) befestigt sind der größer als den Abstand (23) der Tasträder (24) an den Drehachsen (8) der beiden inneren Rechräder (5,5') ist.

2. Heuwerbungsmaschine nach dem vorhergehenden Anspruch, dadurch gekennzeichnet, daß der Stützradträger (19) beiderseits mit einem Stützrad (18 und 18') versehen oder als Gabel ausgebildet ist, deren beabstandete Schenkel je ein Stützrad (18 und 18') tragen.

3. Heuwerbungsmaschine nach einem der vorhergehenden Ansprüche, dadurch gekennzeichnet, daß zumindest der einzeln, mittig am inneren Tragrahmen (2) angebrachte Stützradträger (19) vorzugsweise aber alle Stützradträger (19,19') nach oben bis über die Höhe des inneren Tragrahmens (2) verschwenkbar gelagert sind und in dieser Lage gegen Herabschwenken gehalten sind.

4. Heuwerbungsmaschine nach Anspruch 1, dadurch gekennzeichnet, daß die Abstützvorrichtung (17) zwei Stützradträger (19,19') umfaßt, die symmetrisch an dem inneren Tragrahmen (2) befestigt sind.

5. Heuwerbungsmaschine nach einem der vorhergehenden Ansprüche, dadurch gekennzeichnet, daß jeder Stützradträger (19,19') zusätzlich über eine in der Länge einstellbare Abstützung (25) mit dem inneren Tragrahmen (2) verbunden ist.

6. Heuwerbungsmaschine nach dem vorhergehenden Anspruch, dadurch gekennzeichnet, daß die Abstützung (25) des Stützradträgers (19,19') mit einer parallel zu dieser angeordneten Feder (26) abgefedert ist.

7. Heuwerbungsmaschine nach einem der vorhergehenden Ansprüche, dadurch gekennzeichnet, daß der Stützradträger (19,19') über ein hydraulisches Verstellmittel (28) mit dem inneren Tragrahmen (2) verbunden ist, mit dessen Hilfe der Stützradträger (19,19') der Höhe nach verschwenkbar ist.

8. Heuwerbungsmaschine nach einem der vorhergehenden Ansprüche, dadurch gekennzeichnet, daß bei Verschwenken des Stützradträgers (19 oder 19') die Feder (26) der Abstützung (25) entspannt und nach dem Verschwenken wieder gespannt wird.

9. Heuwerbungsmaschine nach Anspruch 1, dadurch gekennzeichnet, daß die Verbindungsvorrichtung (16) für ein Zugfahrzeug aus einer Deichsel (13) mit Zugmaul (27) besteht, die am inneren Tragrahmen (2) der Maschine um eine liegende, quer zur Arbeitsrichtung (11) ausgerichtete Deichselschwenkachse (14) höhenverschwenkbar ist und mittels einer Deichselverstellvorrichtung (15) in einer geeigneten Höhenlage feststellbar ist.

10. Heuwerbungsmaschine nach dem vorhergehenden Ansprüch 9, dadurch gekennzeichnet, daß die Deichselverstellvorrichtung (15) aus einem hydraulischen Verstellmittel (29) besteht, mit dem die Deichsel (13) durch Verschwenken um die Deichselschwenkachse (14) in einer geeigneten Höhenlage einstellbar ist, das zwischen Deichsel (13) und innerem Tragrahmen (2) eingeschaltet ist.

## Claims

1. A hay making machine for tedding and turning of fodder with at least four rake wheels (5,5',6,6') mounted transversally to the working direction (11) of the hay making machine onto supporting frames (2,3,3') of a machine frame (1) with upright directed rake wheel axles (8) and driven in pairs in a counter-rotating manner and supported to the ground by means of contacting wheels (24), said supporting frames (2,3,3') being connected by links (9,9') articulating around a horizontal and in working direction (11) of the hay making machine directed swivel axle and swivelled from a working position into an upright transporting position reducing the lateral extension of the machine to the provided lateral road transport extension, the central supporting frame (2) with the connection device (16) for a tractor remaining in working position, characterized in that the central supporting frame (2) is equipped with a supporting device (17) including at least one supporting wheel (18) and the supporting wheel beam (19,19') thereof being articulated to the central supporting frame (2) by at least one horizontal and oblique to the working direction (11) directed swivel axle (21,21'), swivelling in an upward direction and extending over the rake wheels (5,5',6,6') and supported by means of at least one supporting wheel (18) to the ground behind of the rake wheels (5,5',6,6') and in minute distance thereof, attached one sole supporting wheel beam (19) to the middle of the central supporting frame (2) or two supporting wheel frames (19,19') attached thereto in a distance asunder which is larger than the distance (23) of the contacting wheels (24) between the rake wheel axles (8) of the two innermost rake wheels (5,5').

2. A hay making machine according to claim 1, characterized in that the supporting wheel beam (19) is fitted on both sides with a supporting wheel (18 and 18') or is formed like a fork to which each distant leg is attached a supporting wheel (18 and 18').

3. A hay making machine according to one of the preceeding claims, characterized in that the one sole supporting wheel beam (19,19') is applied in the middle of the central supporting frame (2) and preferable all supporting wheel beams (19,19') are attached to the central supporting frame (2) pivotable in upward direction over the upward extension of the central supporting frame (2) and fastenable in this position.

4. A hay making machine according to claim 1, characterized in that the supporting device (17) includes two supporting wheel beams (19,19') fastened symmetrically to the central supporting frame (2).

5. A hay making machine according to one of the preceeding claims, characterized in that each supporting wheel beam (19,19') ist connected additionally with a longitudinal adjustable supporting rod (25) to the central supporting frame (2).

6. A hay making machine according to the preceeding claim, characterized in that supporting rod (25) of the supporting wheel beam (19,19') is cushioned with a spring (26) disposed parallel to the supporting rod (26).

7. A hay making machine according to one of the preceeding claims, characterized in that the supporting wheel beam (19,19') is connected to the central supporting frame (2) by means of a hydraulic adustable mean (28) for upward swiveling of the supporting wheel beam (19,19').

8. A hay making machine according to one of the preceeding claims, characterized in that the spring (26) of the supporting device (25) is unloaded by the swiveling of the supporting wheel beam (19 and 19') and loaded again afterward.

9. A hay making machine according to claim 1, characterized in that the connecting device (16) for a tractor consists of a drawbar (13) with a yoke (27) which is articulated pivotable in an upward direction to the central supporting frame (2) by means of drawbar-adjustment (15) and is fixable in a convenient upward pivoted position.

10. A hay making machine according to the preceeding claim, characterized in that the drawbar-adjustment (15) consists of an hydraulic adjustable mean (29) for the adjustment of the drawbar (13) by pivotal adjustment around the swivelling axle (14) of the drawbar (13) to a convenient upward position and said mean (29) being inserted between the drawbar (13) and the central supporting frame (2).

## Revendications

1. Machine de fenaison pour l'épandage et le retournement de produits végétaux à tige avec au moins quatre roues de ratissage (5,5',6,') entraînées par paires en sens contraire autour des axes rotatifs (8) sensiblement verticaux et montées sur des châssis portants (2,3,3') d'un châssis de la machine (1) sectioné, aligné perpendiculaire à la direction de travail (11) et reposant sur le sol à des roues d'appui (24), ces châssis portants (2,3,3') étant relies un à l'autre avec des charnières (9,9') articulantes pivotants autour des axes de pivotement sensiblement horzontales alignées à la direction de travail (11), ces châssis portants (3,3') peuvent être pivotés dans une position de transport vers le haut en reduisant la largeur de la machine à la mesure de largeur de chaussée et pendent que le châssis portant central (2), que porte le dispositif de liaison (16) pour une véhicule à traction, reste sur le sol sans pivotement, caractérisée en ce que le châssis portant central (2) est muni avec un dispositif d'appui (17) contenant au moins un roue d'appui (18) et dont les supports de roue d'appui (19,19') sont attachés au châssis portant central (2) et pivotable vers le haut par au moins un axe de pivotment (21,21') aligné sensiblement horizontal et perpendiculaire à la direction de travail (11) de la machine, ces supports de roue d'appui (19,19') s'étendent sur les roues de ratissage (5,5',6,6') en reposant le châssis de la machine (1) avec au moins un roue d'appui (18) sur le sol à derrière de ces roues de ratissage (5,5',6,6') dans une distance (20) étroite au ceux-ci et dans le cas où un seul support de roue d'appui (19) est prévue c'est monté au milieu du châssis portant central (2) et en utilisant deux supports de roue d'appui (19,19') ces sont montés sur le châssis portant central (2) dans une distance plus grande que la distance (23) des roues d'appui (24) aux axes rotatifs (8) des les deux roues de ratissage (5,5') centrales.

2. Machine de fenaison selon la revendicaton 1, caractérisée en ce que le support de roue d'appui (19) est équippé de deux côtés d' un roue d'appui (18 et 18') ou est formé comme une fourche dont chaque de leurs dents distancés est muni d'un seul roue d'appui (18 et 18').

3. Machine de fenaison selon l'une des revendicatons précédantes, caractérisée en ce que le seul support de roue d'appui (19) monté au milieu de châssis portant interieur (2) et en préférence tous les châssis portants (19,19') sont articulés pivotables jusqu'sur le niveau du châssis portant central (2) est sont fixable dans ça position.

4. Machine de fenaison selon l'une des revendicatons précédentes, caractérisée en ce que le dispositif d'appui (17) entoure deux supports de roue d'appui (19,19') qui sont montés au châssis portant central (2) à une mode symmétrique.

5. Machine de fenaison selon l'une des revendicatons précédentes, caractérisée en ce que chaque support de roue d'appui (19,19') est relié supplémentaire au châssis portant central (2) avec un support (25) d'un longeur ajustable.

6. Machine de fenaison selon l'une des revendicatons précédentes, caractérisée en ce que le support (25) du support de roue d'appui (19,19') est amortissé à une ressort (26) reliée en parallele de celui-ci.

7. Machine de fenaison selon l'une des revendicatons précédentes, caractérisée en ce que le support de roue d'appui (19,19') est relié au châssis portant central (2) par un moyen de réglage hydraulique (28) pour le pivotement du support de roue d'appui (19,19') ver le haut.

8. Machine de fenaison selon l'une des revendicatons précédentes, caractérisée en ce que en pivotement du support de roue d'appui (19 ou 19') la ressort (26) se détend et est étendue après du pivotement.

9. Machine de fenaison selon l'une des revendicatons précédentes, caractérisée en ce que le dispositif de liaison (16) pour une véhicule à traction se consiste d' un timon (13) avec une oeillet (27) attaché au châssis portant central (2) de la machine, pivotable autour un axe de pivotement (14) du timon (13) ver le haut, arrangé transversal à la direction de travail (11) et sensiblement horizontal, ce timon (13) étant fixable dans une position de l'hauteur convenable.

10. Machine de fenaison selon la revendication précédentes, caractérisée en ce que le dispositif de réglage (15) de timon (13) consiste d'un moyen de réglage hydraulique (28) étant inserré entre le timon (13) et le châssis potant central (2) pour le pivotement autour de l'axe de pivotement (14) du timon (13) pour le réglage du timon à une hauteur convenable.
